Europäisches Patentamt

European Patent Office

Office européen des brevets

(19)

(11) Veröffentlichungsnummer: **0 182 027 B1**

## (12) EUROPÄISCHE PATENTSCHRIFT

(45) Veröffentlichungstag der Patentschrift: **29.04.92**

(21) Anmeldenummer: **85111582.4**

(22) Anmeldetag: **13.09.85**

(51) Int. Cl.⁵: **H04Q 7/04**

(54) **Funktelefonnetz.**

(30) Priorität: **15.11.84 DE 3441722**

(43) Veröffentlichungstag der Anmeldung:
**28.05.86 Patentblatt 86/22**

(45) Bekanntmachung des Hinweises auf die
Patenterteilung:
**29.04.92 Patentblatt 92/18**

(84) Benannte Vertragsstaaten:
**AT BE CH DE FR GB IT LI LU NL SE**

(56) Entgegenhaltungen:
EP-A- 0 111 970      FR-A- 2 376 570
US-A- 3 898 390      US-A- 4 144 412
US-A- 4 435 840      US-A- 4 475 010
US-A- 4 670 899

PATENT ABSTRACTS OF JAPAN, Band 8, Nr.
272 (E-284)[1709] 13. Dezember 1984; & JP-
A-59 143 436

(73) Patentinhaber: **ROBERT BOSCH GMBH**
**Postfach 30 02 20**
**W-7000 Stuttgart 30(DE)**

(72) Erfinder: **Ketterling, Hans-Peter, Dipl.-Ing.**
**Manfred-von-Richthofen-Strasse 11**
**W-1000 Berlin 42(DE)**

(74) Vertreter: **Schmidt, Hans-Ekhardt**
**Robert Bosch GmbH Geschäftsbereich Elek-**
**tronik Patent- und Lizenzabteilung Forcken-**
**beckstrasse 9-13**
**W-1000 Berlin 33(DE)**

## Beschreibung

Die Erfindung geht von einem Funktelefonnetz nach der Gattung des Patentanspruchs aus.

## Stand der Technik

Es ist schon ein derartiges Funktelefonnetz bekannt (US-A-4,144,412), bei dem bei Überschreitung einer höchstzulässigen Zahl von Funktelefonen in einer Funkzelle die über diese Zahl hinausgehenden Funktelefone durch die Funkvermittlungsstelle gesteuert anderen Funkzellen zugeordnet werden. Dadurch ergeben sich in diesen Funkzellen wechselnde Frequenzverteilungen, die zu Störungen Anlaß geben können.

## Aufgabe der Erfindung

Der Erfindung liegt die Aufgabe zugrunde, ein Funktelefonnetz gemäß dem Oberbegriff des Patentanspruchs derart weiterzubilden, daß Störungen weitgehend vermieden werden, die durch die Zuordnung von Funktelefonen zu anderen Funkzellen entstehen.

## Lösung und Vorteile der Erfindung

Diese Aufgabe wird durch das Funktelefonnetz nach dem Patentanspruch gelöst. Der durch die Erfindung erzielbare Vorteil besteht insbesondere darin, daß wechselnde Frequenzverteilungen nur in der Nähe derjenigen Funkzelle auftreten, in der sich das Funktelefon gerade befindet, und zwar in der Regel sogar nicht in dem gesamten Grenzbereich der Funkzelle, sondern nur in einem Teilbereich.

Zeichnung und Beschreibung der Erfindung

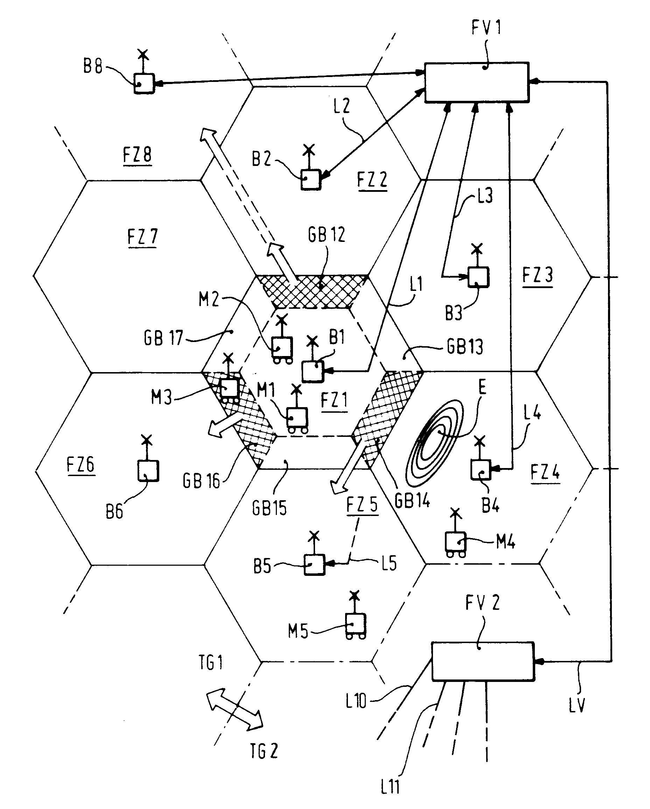

Ein Ausführungsbeispiel der Erfindung ist in der Zeichnung an Hand einer Figur dargestellt. In der Figur ist ein Ausschnitt aus einem Funkgebiet gezeigt, das in Funkzellen FZ1, FZ2 ... aufgeteilt ist. Die Funkzellen sind als Sechsecke dargestellt, obgleich sie in der Praxis je nach den räumlichen Gegebenheiten des Geländes verschieden geformt sein und sich auch überlappen können. Jede Funkzelle FZ1, FZ2 ... enthält eine ortsfeste Funkstation B1, B2 ... Die ortsfesten Funkstationen eines ersten Teilgebietes TG1 mit einer größeren Zahl von Funkzellen sind über Leitungen L1, L2 ... mit einer Funkvermittlungsstelle FV1 verbunden. Bei einem zweiten in Funkzellen aufgeteilten Teilgebiet TG2 sind die ortsfesten Funkstationen über Leitungen L10, L11 ... mit einer weiteren Funkvermittlungsstelle FV2 verbunden, die mit der Funkvermittlungsstelle FV1 in Verbindung steht; vgl. Leitungsverbindung LV.

Innerhalb der Funkzellen operieren mobile Funktelefone M1, M2 ..., die normalerweise mit der ortsfesten Funkstation ihrer Funkzelle Funkkontakt haben. Wechselt ein mobiles Funktelefon, zum Beispiel M1, von einer Funkzelle, zum Beispiel FZ1, in eine benachbarte Funkzelle, zum Beispiel FZ5, so erhält es von der Funkvermittlungsstelle FV1 eine geeignete ortsfeste Funkstation, zum Beispiel B5, der Funkzelle FZ5 zugewiesen. Tritt nun aber der Fall ein, daß sich innerhalb einer Funkzelle, zum Beispiel FZ1, mehr mobile Funktelefone M1, M2 ... aufhalten, als die ortsfeste Funkstation, zum Beispiel B1, bedienen kann, dann findet eine im folgenden beschriebene dynamische Zellgrößensteuerung durch die Funkvermittlungsstelle statt. Die Funkvermittlungsstelle FV1 verfolgt nämlich laufend die Zahl der mobilen Funktelefone M1, M2 ... in den ihr zugeordneten Funkzellen FZ1, FZ2 ... ihres Teilgebietes TG1. Stellt sie fest, daß in einer Funkzelle, zum Beispiel FZ1, die höchstzulässige Zahl von mobilen Funktelefonen überschritten wird, dann weist sie die über diese Zahl hinausgehende Zahl von mobilen Funktelefonen einer anderen Funkzelle, zum Beispiel FZ6, oder mehreren anderen Funkzellen zu, zum Beispiel FZ2 bis FZ7.

Vorteilhafterweise werden von der Funkvermittlungsstelle bei der Wahl der einer anderen Funkzelle zuzuordnenden mobilen Funktelefone bestimmte Kriterien beachtet. Die Funkvermittlungsstelle, zum Beispiel FV1, sollte in der Regel nur mobile Funktelefone auswählen, die sich im Grenzgebiet GB12 bis GB17 der überlasteten Funkzelle, zum Beispiel FZ1, aufhalten, wie zum Beispiel das mobile Funktelefon M3 im Grenzbereich GB16. Dieses mobile Funktelefon wird dann beispielsweise der Funkzelle FZ6 bzw. der ortsfesten Funkstation B6 zugewiesen; vgl. den im Grenzbereich GB16 beginnenden Pfeil. Ein anderes Kriterium für die Auswahl der einer anderen ortsfesten Funkstation zuzuweisenden mobilen Funktelefone sind die topographischen Verhältnisse in den Funkzellen. In der Funkzelle FZ4 ist beispielsweise angedeutet, daß sich im oberen linken Bereich eine ausgedehnte Erhebung E befindet, die den Funkverkehr behindert. Da zu den Funkvermittlungsstellen FV1, FV2 ... Rechner gehören, sind in diesen die topographischen Verhältnisse der Teilgebiete gespeichert.

Wenn somit zum Beispiel die Funkvermittlungsstelle FV1 für die in dem Grenzbereich GB14 befindlichen mobilen Funktelefone eine andere ortsfeste Funkstation aussucht, dann wird die Erhebung E automatisch berücksichtigt, so daß den mobilen Funktelefonen des Grenzbereiches GB14 nicht die in der Nähe liegende ortsfeste Funkstation B4 zugeordnet wird, sondern zum Beispiel die ortsfeste Funkstation B5; vgl. den von dem Grenzbereich GB14 ausgehenden Pfeil.

Die Funkvermittlungsstellen können darüber hinaus bei der Wahl einer anderen ortsfesten Funkstation für die mobilen Funktelefone eines Grenzbereiches einer überlasteten Funkzelle auch berücksichtigen, daß eine unmittelbar benachbarte Funkzelle, zum Beispiel FZ2, ebenfalls überlastet ist, während eine weiter entfernte ortsfeste Funkstation zum Beispiel der Funkzelle FZ8 ohne weiteres noch mehrere mobile Funktelefone übernehmen könnte. In diesem Fall wird ein Teil der in der Funkzelle FZ1 überzähligen mobilen Funktelefone der benachbarten Funkzelle FZ2 zugewiesen, die ihrerseits überschüssige mobile Funktelefone an die ihr benachbarte Funkzelle FZ8 weitergibt; vgl. den von dem Grenzbereich GB12 ausgehenden Pfeil in der Zeichnung.

Ein weiteres von den Funkvermittlungsstellen zu berücksichtigendes Kriterium für die Wahl ist die Übertragungsqualität der Funkverbindungen zwischen den ortsfesten Funkstationen B1, B2 ... und den mobilen Funktelefonen M1, M2 ... Die Qualitätskriterien sind in den Rechnern der Funkvermittlungsstellen gespeichert und werden laufend auf dem neuesten Stand gehalten.

## Patentansprüche

1. Funktelefonnetz für ein in Funkzellen aufgeteiltes Funkgebiet mit im gesamten Funkgebiet operierenden mobilen Funktelefonen, mit einer ortsfesten Funkstation je Funkzelle und mit einer den ortsfesten Funkstationen gemeinsamen Funkvermittlungsstelle (FV1), die laufend die Zahl der sich in ihren Funkzellen (FZ1, FZ2) aufhaltenden mobilen Funktelefone (M1, M2) verfolgt und bei festgestelltem Überschreiten einer für eine Funkzelle höchstzulässigen Zahl von mobilen Funktelefonen die über diese Zahl hinausgehenden mobilen Funktelefone einer oder mehreren anderen Funkzellen zuordnet, **dadurch gekennzeichnet,** daß die Funkvermittlungsstelle (FV1) bevorzugt die mobilen Funktelefone (M2) im Grenzbereich (GB12, GB13) einer überlasteten Funkzelle (FZ1) einer benachbarten, möglichst der nächstliegenden Funkzelle zuordnet und daß der gesamte Grenzbereich einer Funkzelle (FZ1) in mehrere Grenzbereiche (GB12, GB13) aufgeteilt ist, die von der Funkvermittlungsstelle (FV1) getrennt behandelt werden.

## Claims

1. Radiotelephone network for a radio zone divided into radio cells, with mobile radiotelephones operating in the entire radio zone, with a stationary radio station for each radio cell and with a radio relay station (FV1) which is common to the stationary stations, continuously tracks the number of mobile radiotelephones (M1, M2) residing in its radio cells (FZ1, FZ2) and, when it establishes that the maximum permissible number of mobile radiotelephones for one radio cell has been exceeded, assigns the mobile radiotelephones in excess of this number to one or more other radio cells, characterised in that the radio relay station (FV1) preferably assigns the mobile radiotelephones (M2) in the boundary region (GB12, GB13) of an overloaded radio cell (FZ1) to an adjacent radio cell, if possible the one lying nearest, and the entire boundary region of a radio cell (FZ1) is divided into a plurality of boundary regions (GB12, GB13) which are handled separately by the radio relay station (FV1).

## Revendications

1. Réseau radiotéléphonique pour une région radio divisée en cellules radio avec des radiotéléphones mobiles opérant dans l'ensemble de la région radio, avec une radiostation fixe pour chaque cellule radio et avec une station de radiotransmission (FV1) commune aux stations fixes, qui surveille en permanence le nombre des radiotéléphones mobiles (M1, M2) se trouvant dans ses cellules radio (FZ1, FZ2) et qui, lorsqu'il est constaté un dépassement d'un nombre maximal admissible de radiotéléphones mobiles pour une cellule radio, associe les radiotéléphones mobiles dépassant ce nombre à une ou plusieurs autres cellules radio, réseau radiotéléphonique caractérisé en ce que la station de radiotransmission (FV1) associe de préférence les radiotéléphones mobiles (M2) dans la zone limite (GB12, GB13) d'une cellule radio surchargée (FZ1) à une cellule radio voisine, autant que possible la plus proche, et en ce que l'ensemble de la zone limite d'une cellule radio (FZ1) est divisé en plusieurs zones limites (GB12, GB13) qui sont traitées séparément par la station de radiotransmission (FV1).